# EUROPEAN PATENT APPLICATION

(11) **EP 4 564 559 A1**
(43) Date of publication of application: **04.06.2025**
(21) Application number: 24215761.8
(22) Date of filing: 27.11.2024
(51) Int. Cl.: H01M 50/284, H01M 50/291, H01M 10/42, H01M 10/6556, H01M 10/667, H01M 50/213, H01M 50/507

(54) **BRACKET, ELECTRICAL CONNECTION ASSEMBLY, AND BATTERY MODULE**

(30) Priority: 28.11.2023 CN 202311610836; 28.11.2023 CN 202323231140 U; 28.11.2023 CN 202311610875; 28.11.2023 CN 202323231159 U; 30.09.2024 WO PCT/CN2024/122720
(71) Applicant: Eve Energy Co., Ltd., Huizhou, Guangdong 516006 (CN)
(72) Inventor: HUANG, Zhihua, Huizhou, Guangdong 516006 (CN); CHEN, Jingcong, Huizhou, Guangdong 516006 (CN)
(74) Representative: Berggren Oy

(57) **Abstract**

The present disclosure provides a bracket (002), an electrical connection assembly (001), and a battery module, and relates to the technical field of batteries. The bracket (002) includes a first bracket (216) and a second bracket (217). The first side of the first bracket (216) is configured to mount a CCS assembly (011), and the second side is connected to the second bracket (217). The second bracket (217) is provided with a first mounting slot (2171) configured to mount a BMS board (012), and one end of the first mounting slot (2171) is provided with a first slot (215), which is configured to electrically connect the BMS board (012) to the BDU module (013a). The first side wall (213) is in contact with the BDU module (013a). The first bracket (216) is provided with a first through-hole (214) configured to electrically connect the CCS assembly (011) to the BMS board (012).

## Description

### CROSS-REFERENCE TO RELATED APPLICATION

This application claims priority to Chinese Patent Application Nos. 202311610836.9, 202323231159.8, 202311610875.9, 202323231140.3 and 202311610836.9, filed on November 28, 2023, and PCT application No. PCT/CN2024/122720 filed on September 30, 2024, the disclosure of which are incorporated herein by reference in their entirety.

### TECHNICAL FIELD

The present disclosure relates to the field of batteries, and in particular, to a bracket, an electrical connection assembly, and a battery module.

### BACKGROUND

In related arts, a battery module outputs a high-voltage current of the battery module to an input terminal of a BDU module (i.e., battery energy distribution unit) through a part of an electrical connection assembly. Meanwhile, the battery module transmits the voltage information of the battery module to a voltage collection terminal of a battery management system (BMS board) through another part of the electrical connection assembly.

### SUMMARY

The above-mentioned electrical connection assembly involves a large number of components, which results in a complex structure of the electrical connection assembly and low assembly efficiency.

In a first aspect, embodiments of the present disclosure provide a bracket, which includes a first bracket and a second bracket. The first bracket has a first side and a second side opposite to each other, and the first side is configured to mount a CCS assembly. The second bracket extends from the second side in a direction away from the first bracket. One side of the second bracket away from the first bracket is provided with a first mounting slot configured to mount a BMS board. One end of the first mounting slot is provided with a first slot, which penetrates through a first side wall of the second bracket, and the first side wall is configured to contact a BDU module; wherein the first side is provided with a plurality of first through-holes, the plurality of first through-holes are communicated with a bottom of the first mounting slot, the first through-hole is used for electrically connecting the CCS assembly to the BMS board, and the first slot is used for electrically connecting the BMS board to the BDU module.

In a second aspect, embodiments of the present disclosure further provide an electrical connection assembly including the CCS assembly, the BMS board, the BDU module, and the aforementioned bracket. The CCS assembly is mounted on the first side; the BMS board is mounted in a first mounting slot; the BDU module abuts against the first side wall; wherein an electrical connection structure disposed between the CCS assembly and the BMS board is disposed in the first through-hole, and the electrical connection structure disposed between the BMS board and the BDU module is disposed in the first slot.

In a third aspect, embodiments of the present disclosure further provide a battery module including a battery cell bracket, a battery cell, and the aforementioned electrical connection assembly. The battery bracket includes a base and a top cover. The base is provided with a mounting slot, and the mounting slot includes a plurality of battery cell mounting slots, a BMS mounting slot and a BDU mounting slot. The top cover covers the mounting slot. The battery cells disposed in the battery cell mounting slot. The first bracket is disposed between the base and the top cover. The CCS assembly is disposed on the side of the first bracket close to the top cover. The second bracket is inserted into the BMS mounting slot. The BDU module is disposed in the BDU mounting slot.

### The present disclosure has the following advantages:

In the present disclosure, a first bracket for mounting a CCS assembly and a second bracket for mounting a BMS board are integrated. Further, an BDU module is disposed close to the BMS board. In this way, the CCS assembly can be directly electrically connected to the BMS board through a first through-hole to transmit a voltage signal, and the BMS board can be electrically connected to the BDU module through a first slot to output a high-voltage current. Therefore, on the one hand, the CCS assembly adopts a set of first output poles, which can not only realize the transmission of voltage signals, but also realize the output of high-voltage current, thereby omitting a set of first output poles, thus finally saving the material cost of the electrical connectors of the battery module and related mounting process costs, and improving the mounting efficiency. On the other hand, the components such as bridge-joint bus-bars, bolts, wire-bundles, connectors, and the related mounting processes can be omitted, thereby further simplifying the structure of the electric connectors and further improving mounting efficiency.

### DESCRIPTION OF THE DRAWINGS

FIG. 1 is a schematic structural diagram of a bracket according to according to some embodiments of the present disclosure.
FIG. 2 is a side view of a bracket according to some embodiments of the present disclosure.
FIG. 3 is a top view of a bracket according to some embodiments of the present disclosure.
FIG. 4 is an enlarged view at A in FIG. 1.
FIG. 5 is a schematic structural diagram of a bracket in a bottom view according to some embodiments of the present disclosure.
FIG. 6 is a schematic structural diagram of an end of a first side wall away from a first bracket according to some embodiments of the present disclosure.
FIG. 7 is a schematic structural diagram of an electrical connection assembly according to some embodiments of the present disclosure.
FIG. 8 is a schematic structural diagram of a BMS board according to some embodiments of the present disclosure.
FIG. 9 is a schematic diagram of an electrical connection structure between electrical components according to some embodiments of the present disclosure.
FIG. 10 is a schematic structural diagram of a bus-bar group according to some embodiments of the present disclosure.
FIG. 11 is a schematic structural diagram of an BDU module according to some embodiments of the present disclosure.
FIG. 12 is an exploded view of a BDU module according to some embodiments of the present disclosure.
FIG. 13 is a schematic structural diagram of a bracket from another perspective according to some embodiments of the present disclosure.
FIG. 14 is an exploded view of a battery module according to some embodiments of the present disclosure.
FIG. 15 is an exploded view of a battery cell bracket according to some embodiments of the present disclosure.
FIG. 16 is a schematic structural diagram of a base according to some embodiments of the present disclosure.
FIG. 17 is a schematic structural diagram of a base in another viewing according to some embodiments of the present disclosure.
FIG. 18 is a top view of a base according to some embodiments of the present disclosure.
FIG. 19 is a cross-sectional view along A-A in FIG. 18.
FIG. 20 is a schematic view of a top cover a base matching with each other according to some embodiments of the present disclosure.
FIG. 21 is a top view of FIG. 20.
FIG. 22 is a cross-sectional view along B-B in FIG. 21.
FIG. 23 is an exploded view of some components of the battery module according to some embodiments of the present disclosure.
FIG. 24 is an enlarged view at C in FIG. 22.
FIG. 25 is a cross-sectional view of a second cylinder according to some embodiments of the present disclosure.
FIG. 26 is a schematic view of a top cover and a base matching with each other in another viewing according to some embodiments of the present disclosure.
FIG. 27 is a schematic diagram of electrical connections of portions of some electrical components of a battery module according to some embodiments of the present disclosure.
FIG. 28 is a schematic diagram of the hydraulic principle of a thermal management system of a battery module according to some embodiments of the present disclosure.
FIG. 29 is a schematic structural diagram of a base and a bracket matching with each other according to some embodiments of the present disclosure.
FIG. 30 is an enlarged view at D in FIG. 29.
FIG. 31 is an enlarged view at E in FIG. 23.

### List of reference numbers:

001-electrical connection assembly;
011-CCS assembly; 111-first output pole; 112-bus-bar; 1121-main parallel bus-bar; 1122-series bus-bar; 1123-sub-parallel bus-bar; 1125-bus-bar unit;
012-BMS board; 121-voltage collection terminal; 122-second output pole; 1221-second bolt through-hole; 013a-BDU module; 131a-first input pole; 1311-insertion hole; 1312-first bolt through-hole; 132a-housing; 1321-input slot; 1322-output slot; 134-first high-pressure protection cover; 135a-second high voltage protection cover; 136-third output pole; 137-insulating spacer;
002-bracket;
213-first side wall; 2131-positioning aperture; 214-first through-hole; 215-first slot;
216-first bracket; 2161-sub-slots; 21612-pole connection hole; 2162-mating rib; 2163-second through-hole; 2164-first section; 2165-second section; 2166-glue filling through-hole; 2167-first via;
217-second bracket; 2171-first mounting slot; 2172-threading hole; 2173-card board;
218-battery cell mounting area;
003-base; 031-base plate; 311 -first cavity; 312-inner threaded stud; 032-thermalmanagement post; 321-second cavity; 322-first post; 3223-first sealing ring; 3224-insertion ring; 3225-connection ring; 323-second post; 034-step slot; 035-battery cell mounting slot; 351-communication slot; 036-BMS mounting slot; 037-BDU mounting slot; 1225-second sealing ring;
013-top cover; 131-third cavity; 132-third bolt through-hole; 133-annular slot; 134a-first insertion shaft; 1341-first communication hole; 135-mating hole;
014-liquid outlet; 015-liquid inlet; 016-air inlet; 017-air outlet; 018-battery cell;
042-temperature management module; 043-output pipeline; 044-input pipeline; 045-liquid outlet solenoid valve; 046-liquid inlet solenoid valve; 047-air inlet solenoid valve; 048-air outlet solenoid valve; 091-first hydraulic pump; 092-second hydraulic pump; 93-detection module; 94-controller;
055-insulating sheet; 551-second via; 552-mating ring.

### DETAILED DESCRIPTION

Before introducing the bracket and electrical connection assembly of the present disclosure, background information relating to the embodiments of the present disclosure is first introduced.

In the related arts, both the output of the high-voltage current of the battery module and the collection of the battery cell signals need to pass through a CCS assembly (cells contact system). CCS assembly includes a plurality of metal bus-bars. The plurality of metal bus-bars are bus-bars for connecting the plurality of battery cells in series to form a battery module and a first output pole for outputting a high-voltage current of the battery module. The high-voltage current output method of the battery module is as follows: firstly, connecting a set of first output poles of the CCS assembly electrically to bridge-joint bus-bars through bolts, and connecting the bridge-joint bus-bars to an input end of the BDU module through bolts, and finally the BDU module outputting the high-voltage current of the battery module. However, the voltage collection method of the battery module is as follows: firstly, welding the bus-bar of the CCS assembly and another set of first output poles, then transfering the wire-bundles to the voltage collection terminal of the BMS board through the connector. The high-voltage current output method and the voltage collection method has many problems as follows:
1. Since the CCS assembly needs to be connected to the BDU module through a set of first output poles to transmit high-voltage current. Meanwhile, the CCS assembly also needs another set of first output poles to be electrically connected to the BMS board to collect voltage signals of the output poles of the battery module. In this way, the CCS assembly needs two sets of first output poles, which increases the structural complexity and material cost of the electrical connector of the battery module, resulting in low assembly efficiency.
2. Since the first output poles of the CCS assembly, the bridgejoint bus-bars and the BDU module are all connected by bolts, the electric mounting process is increased, and the mounting of the bridge-joint bus-bars needs to be manual determined, which increases the mounting process cost of the battery module process and reducing the assembly efficiency.
3. Since it is necessary to provide wire-bundles welded to the first output poles and the bus-bars between the CCS assembly and the BMS board, and transmit the voltage signals collected by the wire-bundles to the BMS board through an adapter. Howevere, the configuration of the wire-bundles and the connector increases the material cost of the electrical connection of the battery module, further, both the wire-bundles and the connector need to be configured with related process flows to fix their layout, which leads to an increase in the electrical mounting process and an increase in the mounting process cost, thereby reducing the assembly efficiency of the power battery module.

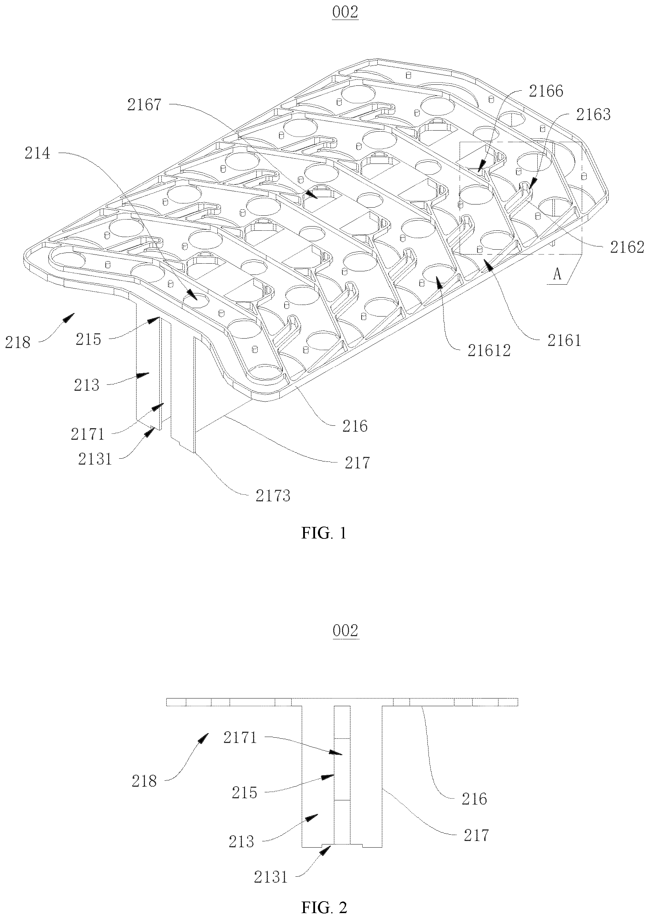

Based on this, embodiments of the present disclosure provide a bracket, an electrical connection assembly, and a battery module, which are described in detail below in connection with FIGs. 1 to 31.

As shown in FIGs. 1 and 2, FIG. 1 is a schematic structural diagram of a bracket 002 according to according to some embodiments of the present disclosure, and FIG. 2 is a side view of a bracket 002 according to some embodiments of the present disclosure. The bracket 002 includes a first bracket 216 and a second bracket 217. The first bracket 216 has a first side and a second side opposite to each other. The first side is configured to mount a CCS assembly. The second bracket 217 extends from the second side in a direction away from the first bracket 216, and one side of the second bracket 217 away from the first bracket 216 is provided with a first mounting slot 2171 configured to mount a BMS board. One end of the first mounting slot 2171 is provided with a first slot 215 which penetrates through a first side wall 213 of the second bracket 217. The first side wall 213 is configured to contact a BDU module. The first side is provided with a plurality of first through-holes 214, the plurality of first through-holes 214 are communicated with a bottom of the first mounting slot 2171, the first through-hole 214 is used for electrically connecting the CCS assembly to the BMS board, and the first slot 215 is used for electrically connecting the BMS board to the BDU module.

It can be understood that the bracket 002 is an insulator, which insulates and isolates the portions that do not need electrical connection between CCS assembly and battery cell. For example, the bracket 002 is a plastic member whose material may be engineering plastics, and in particular may be a mixed material of PC resin and ABS resin. The output terminal of the CCS assembly is electrically connected to the input terminal of the BMS board, and the output terminal of the BMS board is electrically connected to the input terminal of the BDU module. At least one of the output terminal of the CCS assembly and the input terminal of the BMS is located in the first through-hole 214. At least one of the output terminal of the BMS board and the input terminal of the BDU module is located in the first slot 215.

The output terminal of the CCS assembly is a first output pole and a bus-bar. The input terminal of the BMS board is a voltage collection terminal. Meanwhile, the output terminal of the BMS board transmits the high-voltage current from the CCS assembly to the BDU module.

Exemplarily, the input terminal of the BMS board is located on one side of the first through-hole 214 away from the first side. The output terminal of the CCS assembly penetrates through the first through-hole 214, and is electrically connected to the input terminal of the BMS board. The input terminal of the BDU module is located on one side of the first slot 215 away from the first mounting slot 2171, and the output terminal of the BMS board extends out of the first slot 215, and is electrically connected to the input terminal of the BDU.

In embodiments of the present disclosure, the first bracket for mounting the CCS assembly and the second bracket for mounting the BMS board are integrated into a whole. Further, the BDU module is disposed close to the BMS board. In this way, the CCS assembly can be directly electrically connected to the BMS board through the first through-hole 214 to transmit voltage signals, and the BMS board can be electrically connected to the BDU module through the first slot 215 to output a high-voltage current. Therefore, on the one hand, the CCS assembly adopts a set of output poles to realize both the transmission of the voltage signals and the output of the high-voltage current, thereby omitting a set of first output poles, thus finally simplifying the structure of the electric connector of the battery module and improving the mounting efficiency. On the other hand, the components such as bridge-joint bus-bars, bolts, wire-bundles, connectors, and the related mounting processes can be omitted, thereby further reducing the material cost of the electrical connector and the related mounting process cost.

Referring to the figures, in an embodiment, a first side is provided with a second mounting slot configured to mount a CCS assembly, and the first through-hole 214 is disposed at the bottom of the second mounting slot.

It can be understood that the first output pole and bus-bar of the CCS assembly may be embedded in the second mounting slot or may be further bonded in the second mounting slot by glue.

In embodiments of the present disclosure, by providing the second mounting groove to mount the CCS assembly, the CCS assembly can be positioned based on the slot wall of the second mounting slot, thereby improving the positional accuracy of the CCS assembly and further improving the assembly efficiency.

Referring to FIG. 1, in an embodiment, the second mounting slot includes a plurality of sub-slots 2161. The bottom of each sub-slot 2161 is provided with a first through-hole 214.

It can be understood that the first output pole and the bus-bar of the CCS assembly correspond one-to-one to the plurality of sub-slots 2161 and are mounted in the corresponding sub-slots 2161.

In embodiments of the present disclosure, the second mounting slot is configured as a structure of a plurality of sub-slots 2161, so that the first output pole and the bus-bar of the CCS assembly can be respectively located in one of the sub-slots 2161, so that the first output pole and the bus-bar are respectively mounted and positioned based on the plurality of sub-slots 2161, and the position accuracy of the CCS assembly can be further improved.

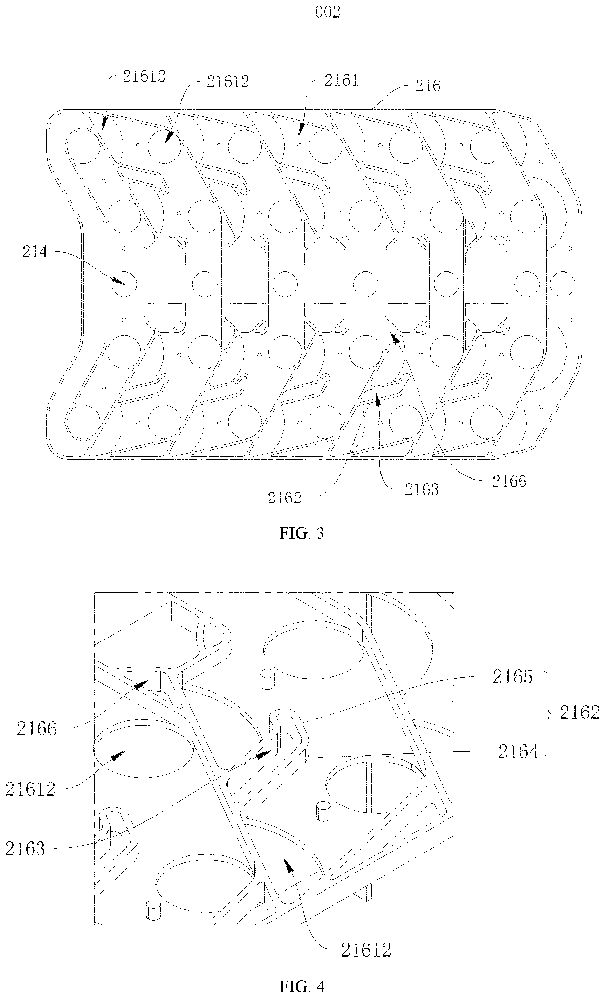

Referring to FIG. 3, which is a top view of a bracket 002 according to some embodiments of the present disclosure. In an embodiment, the CCS assembly is configured to be connected to a battery cell, a plurality of sub-slots 2161 are sequentially disposed along a first direction, and both ends of each of the sub-slots 2161 are symmetrical to each other along a second direction. Both the first direction and the second direction are perpendicular to the axial direction of the battery cell, and the first direction and the second direction are perpendicular to each other.

Exemplarily, the second bracket 217 is disposed opposite the symmetrical center of the sub-slots 2161. The first bracket 216 is a rectangular plate having a long side and a short side. The first direction is parallel to the long side, and the second direction is parallel to the short side. Further, the first bracket 216 has a central symmetry line parallel to the long side.

In embodiments of the present disclosure, by disposing the sub-slots 2161 in a symmetrical structure, the load of the bracket 002 can be balanced, so that the gravity distribution from the CCS assembly borne by the bracket 002 is more uniform, thereby reducing the overload on one side of the bracket 002 or the unbalanced force on both sides of the bracket 002, thus improving the stability and bearing capacity of the bracket 002.

Referring to FIG. 4, which is an enlarged view at A in FIG. 1. In an embodiment, the bottom of each sub-slot 2161 is provided with a mating rib 2162, and the mating rib 2162 is provided with a second through-hole 2163.

It can be understood that the bus-bar is located in each first sub-slot 2161, and that the bus-bar is provided with a slot to match with the mating rib 2162. By matching the slot with the mating rib 2162, the matching surface between the bus-bar and the first sub-slot 2161 can be increased, thereby improving the position stability of the bus-bar.

In addition, in a case that the battery is running and the heat is generated, causing the bus-bar to expand, the bus-bar may squeeze the mating ribs 2162 to deform the second through-hole 2163, thereby providing a buffer space for the expansion deformation of the bus-bar, thereby improving the stress state of the bus-bar, and finally improving the working stability of the bus-bar.

Referring to FIG. 4, in an embodiment, each mating rib 2162 includes a first section 2164 and a second section 2165, one end of the first section 2164 is connected to the slot wall of the sub-slot 2161, and the other end is connected to one end of the second section 2165. There is an angle between the first section 2164 and the second section 2165, and at least a part of the slot wall of each sub-slot 2161, and the first section 2164 and the second section 2165 enclose the hole wall of the second through-hole 2163.

Exemplarily, the angle between the first section 2164 and the second section 2165 ranges from 100° to 170°, including but not limited to, 100°, 120°, 133°, 145°, 160°, and 170°.

In embodiments of the present disclosure, through the above-described arrangement, the mating ribs 2162 and the bus-bar have a plurality of matching surfaces in a plurality of directions. In this way, on the one hand, the mating rib 2162 can position the bus-bar in a plurality of directions, thereby improving the position accuracy of the bus-bar. On the other hand, the mating ribs can provide buffer space for the expanded bus-bar in a plurality of directions, thereby further improving the stress state of the bus-bar.

Referring to FIG. 2, in an embodiment, the second side is provided with a battery cell mounting area 218. There are two battery cell mounting areas 218, which are located on both sides of the second bracket 217, respectively. A plurality of pole connection holes 21612 are also provided inside the first bracket 216 from the first side. The pole connection holes 21612 communicate with the battery cell mounting area.

It can be understood that the battery cell mounting area 218 is configured to mount the battery cells. One end of the CCS assembly located in the second mounting slot is connected to a pole of the battery cell through a pole connection hole 21612. Generally, the pole connection holes 21612 opposite to the positive pole of the battery cell are circular holes, and the pole connection holes 21612 opposite to the negative pole of the battery cell are fan-shaped holes, as shown in FIG. 3.

Exemplarily, two battery cell mounting areas 218 are located on both sides of the first mounting slot 2171 in the width direction. As a result, the BMS board and the BDU module can be located between the two battery cell mounting areas 218, and the bracket 002 can be arranged as a bilateral symmetry structure to facilitate arrangement and mounting of the related components.

In embodiments of the present disclosure, by disposing the battery cell mounting area 218 and the second bracket 217 on the same side of the first bracket 216, the structural compactness of the battery module using the bracket 002 can be improved.

In an embodiment, the first bracket 216 and the second bracket 217 are integrally formed.

Exemplarily, the first bracket 216 and the second bracket 217 are are integrally injection molded.

In embodiments of the present disclosure, by integrally molding the first bracket 216 and the second bracket 217, the overall strength of the bracket can be increased, so that its support for the CCS assembly is more stable.

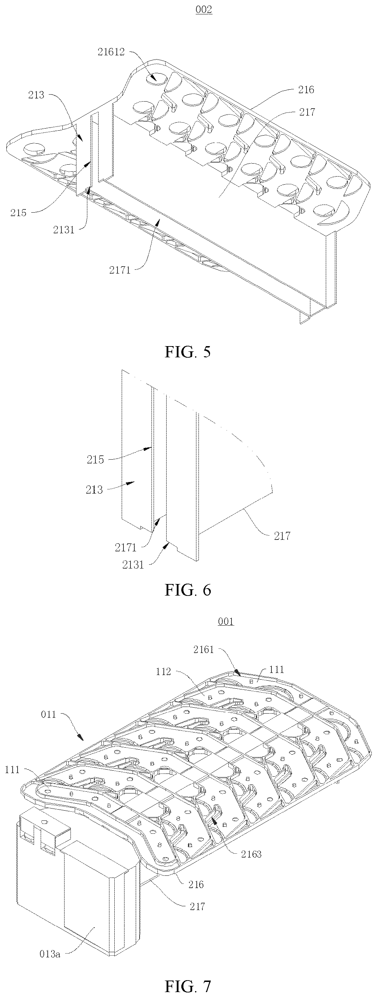

Referring to FIGs. 5 and 6, FIG. 5 is a schematic structural diagram of a bracket 002 in a bottom view according to some embodiments of the present disclosure, and FIG. 6 is a schematic structural diagram of an end of a first side wall 213 away from a first bracket 216 according to some embodiments of the present disclosure. In an embodiment, one end of the first side wall 213 away from the first bracket 216 is provided with a positioning aperture 2131, which communicates with the first slot 215.

It can be understood that the positioning aperture 2131 cooperates with the BMS board. Specifically, a boss is provided on the housing of the BMS board, and in a case that the BMS board is mounted in the first mounting slot 2171, the boss is engaged with the positioning aperture 2131.

In addition, positioning openings are provided at both ends of the first mounting slot 2171 and at one side of the slot close to the first mounting slot 2171. Correspondingly, bosses are disposed at both ends of the housing of the BMS board.

In embodiments of the present disclosure, by arranging the positioning aperture 2131, the matching surface between the second bracket and the BMS board is increased, thereby improving the position accuracy of the BMS board relative to the bracket, and thus facilitating the electrical connection of the BMS board with the BDU and the CCS assembly.

Referring to FIG. 4, in an embodiment, the first bracket is provided with a plurality of glue filling through-holes.

It can be understood that after the components such as the battery cells and the brackets are mounted in the battery box, in order to ensure the electrical connection stability of each electrical component and to control the vibration during transportation, it is necessary to fille glue into them, so as to bond the battery cells, brackets, CCS assembly and the like into a whole by glue.

In addition, the glue filling hole can not only fille the glue, but also realize the lightweight of the bracket, which is beneficial to control the weight of the battery cell.

Referring to FIG. 7, which is a schematic structural diagram of an electrical connection assembly 001 according to some embodiments of the present disclosure. Accordingly, embodiments of the present disclosure further provide an electrical connection assembly 001, which includes a CCS assembly 011, a BMS board 012, a BDU module 013a, and a bracket 002 provided in some embodiments of the present disclosure. The CCS assembly 011 is mounted on the first side. The BMS board 012 is mounted in the first mounting slot 2171. The BDU module 013a abuts against the first side wall 213. The electrical connection structure between the CCS assembly 011 and the BMS board 012 is located in the first through-hole 214. The electrical connection structure between the BMS board 012 and the BDU module 013a is located in the first slot 215.

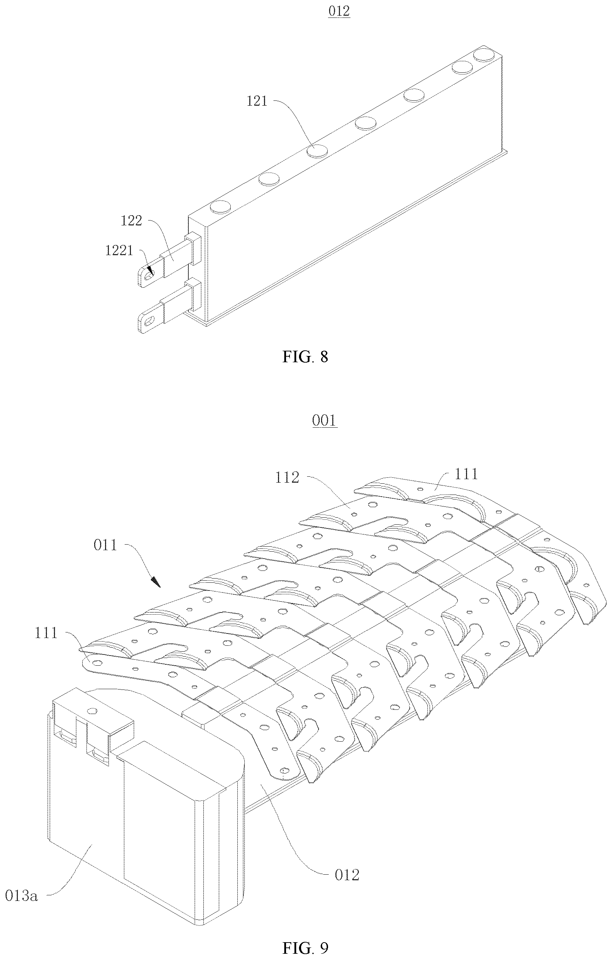

The CCS assembly 011 has a first output pole 111 and a plurality of bus-bars 112. The BMS board 012 has a second output pole 122 and a plurality of voltage collection terminals 121. As shown in FIG. 8, which is a schematic structural diagram of a BMS board 012 according to some embodiments of the present disclosure. Generally, the voltage collection terminals 121 located at both ends of the BMS board 012 are used for collecting the output pole voltage of the battery module. The first output pole 111 and the plurality of bus-bar groups 112 correspond to a plurality of voltage collection terminals 121. The first output pole 111 and the plurality of bus-bar groups 112 are respectively electrically connected to the corresponding voltage collection terminals 121, and the voltage collection terminals 121 electrically connected to the first output pole 111 are also electrically connected to the second output pole 122. The BDU module 013a includes a first input pole 131a, and the first input pole 131a is electrically connected to the second output pole 122. As shown in FIG. 9, which is a schematic diagram of an electrical connection structure between electrical components according to some embodiments of the present disclosure.

It can be understood that the aforementioned input pole includes a positive input pole and a negative input pole, and the output pole includes a positive output pole and a negative output pole, wherein the positive input pole is electrically connected to the corresponding positive output pole, and the negative input pole is electrically connected to the corresponding negative output pole. The electrical connection between the first output pole 111 and the voltage collection terminal 121 and the electrical connection between the bus-bar 112 and the voltage collection terminal 121 may be realized by welding, abutting or plugging. Accordingly, the electrical connection between the first input pole 131a and the second output pole 122 may be realized by welding, abutting or plugging.

The materials of the CCS assembly are AL 1060-0 state. Correspondingly, the first output pole 111 and the bus-bar 112 are aluminum bus-bars. Both the second output pole 122 and the first input pole 131a are copper bus-bars.

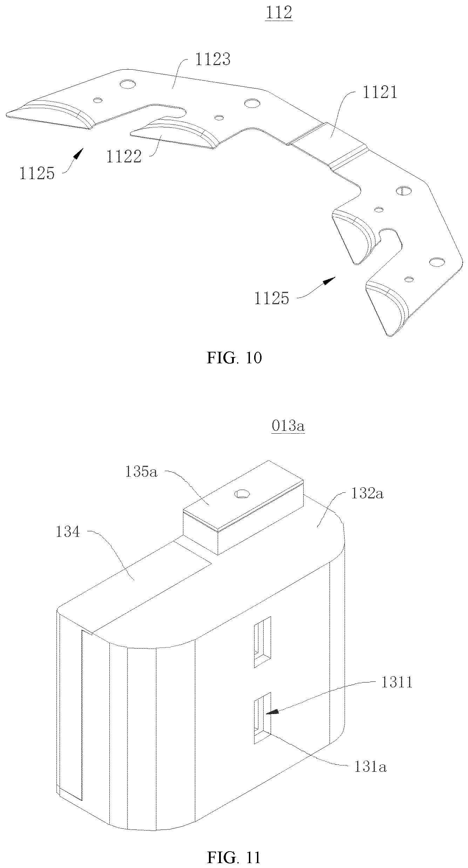

In addition, the plurality of bus-bar groups 112 are sequentially disposed along the first direction, there are two first output poles 111, namely, a positive first output pole and a negative first output pole, and the two first output poles are respectively located at both ends of the arrangement direction of the plurality of bus-bar groups 112. The bus-bar group includes a main parallel bus-bar 1121 and two bus-bar units 1125 symmetrically disposed along the first direction. The bus-bar unit 1125 includes a plurality of series bus-bars 1122 and a plurality of sub-parallel bus-bars 1123 that connect the plurality of series bus-bars 1122 in parallel. One end of the main parallel bus-bar 1121 is connected to the sub-parallel bus-bar 1123 of one bus-bar unit, and the other end is connected to the sub-parallel bus-bar 1123 of another bus-bar unit. As shown in FIG. 10, which is a schematic structural diagram of a bus-bar group 112 according to some embodiments of the present disclosure. The main parallel bus-bar 1121 is connected to the voltage collection terminal of the BMS board.

In embodiments of the present disclosure, the CCS assembly 011, the BMS board 012, and the BDU module 013a are electrically connected in sequence. In this way, the BMS board 012 can not only collect information such as battery cells of the battery cells, but also output high-voltage current from the CCS assembly 011 to the BDU module 013a via the BMS board 012. Therefore, on the one hand, the CCS assembly can realize both the transmission of voltage signals the output of high-voltage current by using a set of first output poles 111, thereby omitting a set of first output poles, thus finally reducing the material cost of the electrical connector and the related mounting process cost, and improving the mounting efficiency. On the other hand, the components such as bridge-joint bus-bars, bolts, wire-bundles, connectors, and the related mounting processes can be omitted, thereby further reducing the material cost of the electrical connector and the related mounting process cost, and improving the mounting efficiency.

In addition, in embodiments of the present disclosure, on the one hand, based on the bracket 002, the CCS assembly 011, the BMS board 012, and the BDU module 013a can be more closely connected together, thereby improving the compactness of the structure of the electrical connection module 001. On the other hand, these components can be supported and positioned based on the bracket 002, thereby improving the stress state of the electrical connection between them, thereby making the electrical connection between these components more stable.

Referring to FIG. 11, which is a schematic structural diagram of an BDU module 013a according to some embodiments of the present disclosure. In an embodiment, the second output pole 122 is plugged into the first input pole 131a. Specifically, one end of the first input pole 131a close to the second output pole 122 is provided with a insertion hole 1311, and the second output pole 122 is inserted into the insertion hole 1311.

In embodiments of the present disclosure, by plugging the second output pole 122 into the first input pole 131a, on the one hand, the BDU module 013a can be positioned relative to the BMS board 012 based on the plug-in structure, thereby improving the position accuracy of the BDU module 013a. On the other hand, the electrical connection structure between the first input pole 131a and the second output pole 122 is simple, easy to operate, and convenient for subsequent maintenance.

The first input pole 131a is provided with a first bolt through-hole 1312. The second output pole 122 is provided with a second bolt through-hole 1221. A nut is disposed in the BDU module 013a. The screw end of the bolt plugging sequentially passes through one end of the first bolt through-hole 1312, the second bolt through-hole 1221, and the other end of the first first bolt through-hole 1312, and is threadedly connected with the nut, thereby fixing the first input pole 131a and the second output pole 122 to each other, completing the high-voltage circuit connection, and further improving the electrical connection stability between the BDU module 013a and the BMS board 012.

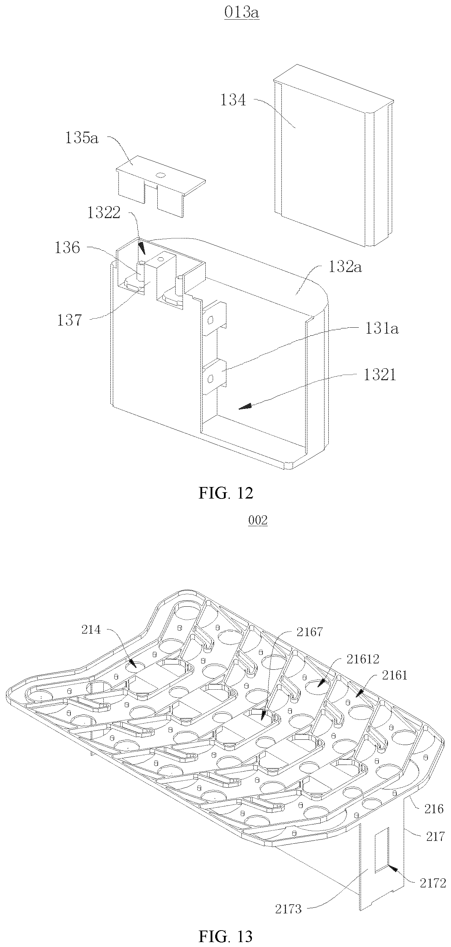

Referring to FIG. 12, which is an exploded view of a BDU module 013a according to some embodiments of the present disclosure. In an embodiment, the BDU module 013a includes a housing 132a, a first high-voltage protection cover 134, a second high-voltage protection cover 135a, an energy distribution unit, a first input pole 131a, and a third output pole 136. The housing 132a defines an accommodating cavity, an input slot 1321, and an output slot 1322. The input slot 1321 is located on one side of the housing 132a away from the BMS board 012. The output slot 1322 is located on one side of the housing 132a close to the first bracket 216. The first input pole 131a is disposed in the input slot 1321, and the first high-voltage protection cover 134 covers the input slot 1321 to insulate the first input pole 131a from the outside. The positive pole and the negative pole of the first input pole 131a are disposed at intervals along the axial direction of the first through-hole 214. The third output pole 136 is disposed in the output slot 1322, and the second high-voltage protection cover 135a covers the output slot 1322 to insulate the third output pole 136 from the outside. The energy distribution unit is disposed in the accommodating cavity, and electrically connects the first input pole 131a to the third output pole 136. The third output pole 136 includes a third positive output pole and a third negative output pole, the third positive output pole is electrically connected to the positive pole of the first input pole 131a, and the third negative output pole is electrically connected to the negative pole of the first input pole 131a. The first input pole 131a is electrically connected to the second output pole.

Referring to FIG. 12, in an embodiment, the third output pole 136 includes a third positive output pole and a third negative output pole. An insulating spacer 137 is disposed between the third positive output pole and the third negative output pole, and is connected to the housing 132a.

It can be understood that in a case that the distance between the third positive output pole and the third negative output pole is small, in order to improve the operation stability of the BDU module 013a, an insulating spacer 137 is disposed between the third positive output pole and the third negative output pole, and the insulating spacer 137 is connected to the housing 132a. In this way, by disposing the insulating spacer 137 between the third positive output pole and the third negative output pole, the insulation between the third positive output pole and the third negative output pole can be improved, thereby improving the operation stability of the BDU module 013a.

Referring to FIG. 13, which is a schematic structural diagram of a bracket 002 from another perspective according to some embodiments of the present disclosure. In an embodiment, the second bracket 217 has a second side wall opposite to the first side wall 213, the second side wall is provided with a threading hole 2172. The side of the BMS board 012 away from the first slot 215 abuts against the end of the first mounting slot 2171 away from the first slot 215, and the data interface of the BMS board 012 is disposed opposite to the threading hole 2172.

In embodiments of the present disclosure, by providing the threading hole 2172, the data line can be connected to the data interface of the BMS board 012 through the threading hole 2172, so as to facilitate the signal connection of the BMS board 012 with other control systems. In addition, the BMS board 012 abuts against the end of the first mounting slot 2171 away from the first slot 215. In a case that the BMS board 012 is plugged into the BDU module 013a, the movement of the BMS board 012 is restricted based on the abutment of the end, thereby limiting the BMS board 012 without the need to manually operate, and improving the convenience and efficiency of assembly.

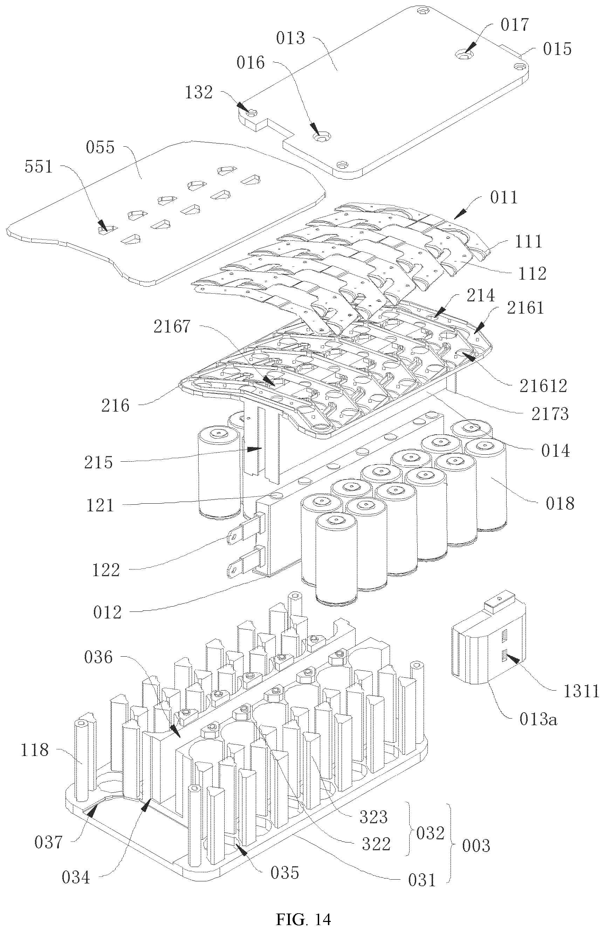

Referring to FIG. 14, which is an exploded view of a battery module according to some embodiments of the present disclosure. Accordingly, embodiments of the present disclosure also provide a battery module including a battery cell bracket, a battery cell 018, and an electrical connection assembly provided in some embodiments of the present disclosure. The battery cell bracket includes a base 003 and a top cover 013. The base 003 is provided with a mounting slot, which includes a battery cell mounting slot 035, a BMS mounting slot 036, and a BDU mounting slot 037. The top cover 013 covers the mounting slot. The battery cell 018 is disposed in the battery cell mounting slot 035. The first bracket 216 is located between the base 003 and the top cover 013, the CCS assembly 011 is located on one side of the first bracket 216 close to the top cover 013, the second bracket 217 is inserted into the BMS mounting slot 036, and the BDU module 013a is located in the BDU mounting slot 036.

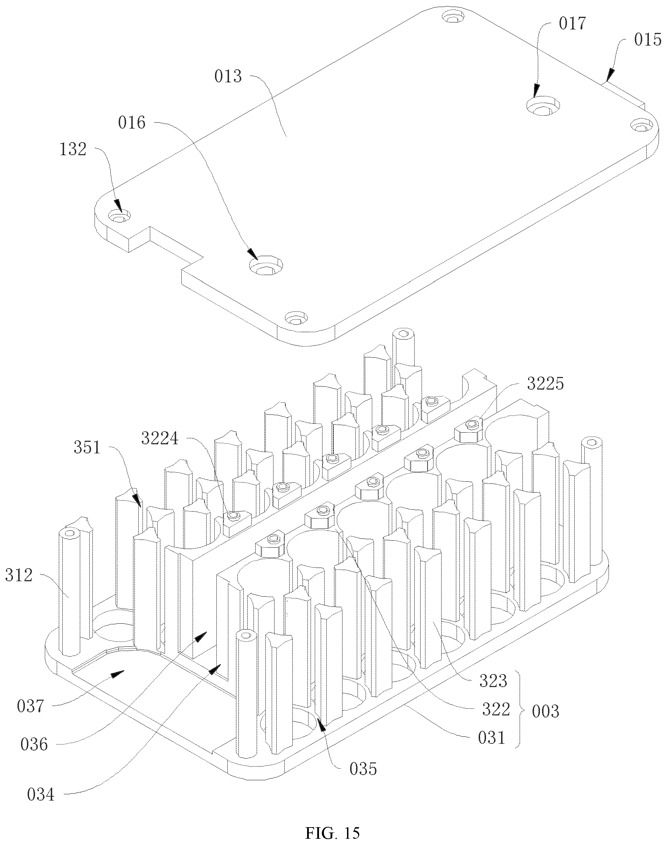

The exploded view of a battery cell bracket is shown in FIG. 15, which is an exploded view of a battery cell bracket according to some embodiments of the present disclosure.

In the related arts, a power battery transmits a heat exchange medium to a thermal management component at the battery module end through a pipeline to perform heat exchange on a battery cell, thereby completing temperature management of the battery cell, so that the battery cell is within a normal operating temperature. In this temperature management method, the thermal management component is generally a plate-like structure, which employs an elongated serpentine tube for circulating the heat exchange medium. However, the long serpentine tube has a long pipeline travel, which results in a long temperature management cycle, i.e., it takes a long time for the heat exchange medium to flow from the liquid inlet of the thermal management component to each battery cell, which results in a low temperature management efficiency. Moreover, the heat exchange medium needs to first perform heat exchange with the battery cell at the liquid inlet end, so that when the heat exchange medium flows to the battery cell far away from the liquid inlet end, the temperature difference between the heat exchange medium and the battery cell far away from the liquid inlet end is not large, as a result, the temperature management of the battery cells far away from the liquid inlet end by the thermal management component is ineffective.

In view of this, the present disclosure provides the following embodiments to solve the above problems.

In some embodiments, a cavity configured to contain a heat exchange medium is disposed inside the battery cell bracket. The surface of the battery cell bracket is provided with a flow channel opening which communicates the cavity with the outside. The heat exchange medium is configured to exchange heat with the components in the mounting slots and/or the CCS assembly 011.

It can be understood that the heat exchange medium is configured to exchange heat with the components in the mounting slot, or the heat exchange medium is configured to exchange heat with the CCS assembly 011, or the heat exchange medium is configured to exchange heat with the components in the mounting slot and the CCS assembly 011.

The flow channel opening includes a liquid outlet 014, a liquid inlet 015, an air inlet 016, and an air outlet 017 that communicate with the cavity. The flow channel opening is disposed on the base 003 or the top cover 013, or a part of the flow channel opening may be disposed on the base 003, and another part of the flow channel opening may be disposed on the top cover 013.

It can be understood that the cavity is filled with a heat exchange medium, such as pure water, distilled water, heat transfer fluid, and the like. When the temperature needs to be increased, the heat exchange medium may can heat the battery. When the temperature needs to be reduced, the heat exchange medium can cool the battery.

In addition, the flow channel opening is a channel for inputting the external heat exchange medium into the cavity or discharging the heat exchange medium from the cavity. Therefore, the flow channel opening includes a liquid outlet 014 and a liquid inlet 015. The flow channel opening may be disposed in the same component or in different components, respectively.

Exemplarily, the liquid outlet 014 and the liquid inlet 015 are disposed on the base 003. When the the base 003 performs thermal management on the battery, the heat exchange medium in the cavity exchanges heat with the battery cell. After the temperature of the heat exchange medium in the cavity reaches a first preset value, or the heat exchange is carried out for a certain period of time, the liquid outlet 014 is opened. At this time, the liquid inlet 015 is closed. The heat exchange medium in the cavity flows into the temperature management module through the liquid outlet 014. The temperature management module performs temperature management on the heat exchange medium, so that the temperature of the heat exchange medium reaches a second preset value. For example, when the second preset value is 50 °C, the heat exchange medium is heated to 50 °C. When the second preset value is 10 °C, the heat exchange medium is cooled to 10 °C. When the heat exchange medium in the cavity is discharged, the liquid inlet 015 is opened, and the liquid outlet 014 is closed. A new heat exchange medium flows into the cavity from the liquid inlet. After the heat exchange medium has filled the cavity, the temperature of the heat exchange medium in the cavity can reach the first preset value, or after a certain period of time, the above steps can be repeated to discharge the heat exchange medium and fille the new heat exchange medium, so as to continuously manage the temperature of the battery.

In embodiments of the present disclosure, by providing a cavity configured to accommodate a heat exchange medium inside the battery cell bracket, so that the battery cell bracket can not only support and fix components such as battery cells, but also thermally manage them, thereby improving the structural compactness of the battery module.

In addition, the thermal management process of the battery cell in embodiments of the present disclosure is a reciprocating cycle of filling cavity and emptying cavity, while the unconventional heat exchange medium continuously flows and circulates. In this way, there is no need to configure an isolation tube wall inside the cavity to make the flow direction of the heat exchange medium inside the cavity unique, thereby simplifying the internal structure of the battery cell bracket. As a result, the manufacturing process of the battery cell bracket is simpler, which is conducive to controlling the manufacturing cost of the battery cell bracket.

In some embodiments, the base 003 is provided with a first cavity 311 configured to accommodate a heat exchange medium, and the heat exchange medium is configured to exchange heat with components located in a mounting slot. The base 003 is provided with a flow channel opening, and the flow channel opening is configured to communicate the first cavity 311 with the outside. In this way, the base 003 can be used to perform thermal management on the battery cell 018, the BMS board 012, and the BDU module 013a located in the mounting slot to improve the reliability of the battery module.

In some embodiments, the top cover 013 is provided with a third cavity 131 configured to accommodate a heat exchange medium, and the third cavity 131 communicates with the first cavity 311. The base 003 and/or the top cover 013 are provided with a flow channel opening, and the flow channel opening is configured to communicate the third cavity 131 and the first cavity 311 with the outside.

Specifically, the base 003 is provided with a flow channel opening, or the top cover 013 is provided with a flow channel opening, or both the base 003 and the top cover 013 are provided with flow channel openings.

Exemplarily, the liquid inlet 015, the air inlet 016, and the air outlet 017 are disposed on the top cover 013, and the liquid outlet 014 is disposed on the base 003. Optionally, the liquid inlet 015 is located on the side wall of the top cover 013 close to the base 003, and the liquid outlet 014 is located on the side wall of the base 003 close to the top cover 013.

In embodiments of the present disclosure, the top cover 013 is provided with a third cavity 131, and the third cavity 131 communicates with the first cavity 311, so that the inside of the top cover 013 can be filled with a heat exchange medium, in this way, the end of the battery cell away from the base plate 031 can be managed through the top cover 013.

In addition, the CCS assembly 011, the BMS board 012, and the BDU module 013a are disposed between the top cover 013 and the base 003, and the top cover 013 and the base 003 can be used to manage the temperature of these three components. As a result, the temperature management of the battery cell 018 and the electrical components can be covered, and a temperature management system integrating the temperature management components of battery cell 018, CCS assembly 011, BMS board 012 and BDU module 013a can be formed, so that the temperature management of more components can be completed with the least number of components, thereby reducing the risk of failure of the temperature management and the manufacturing cost of the temperature management components.

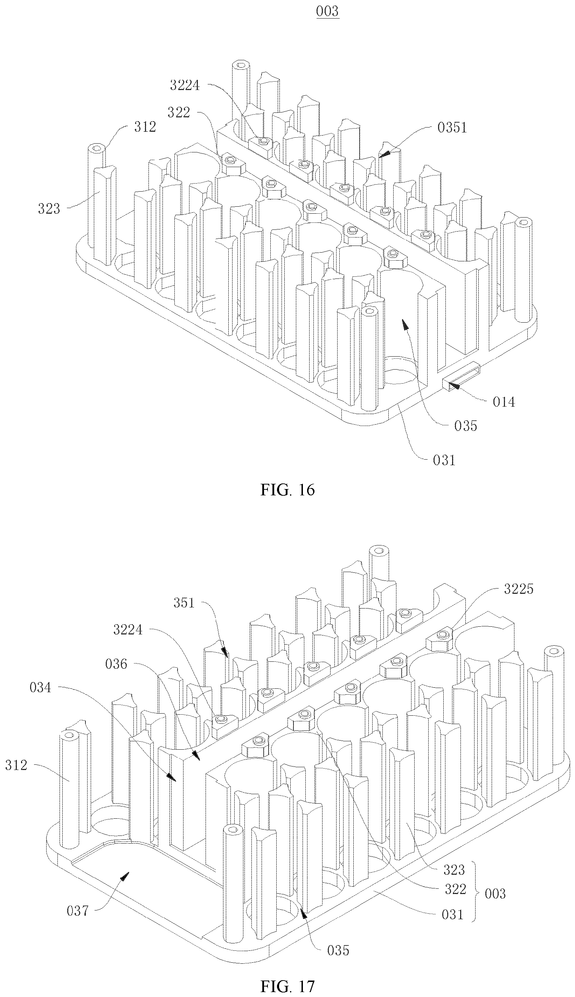

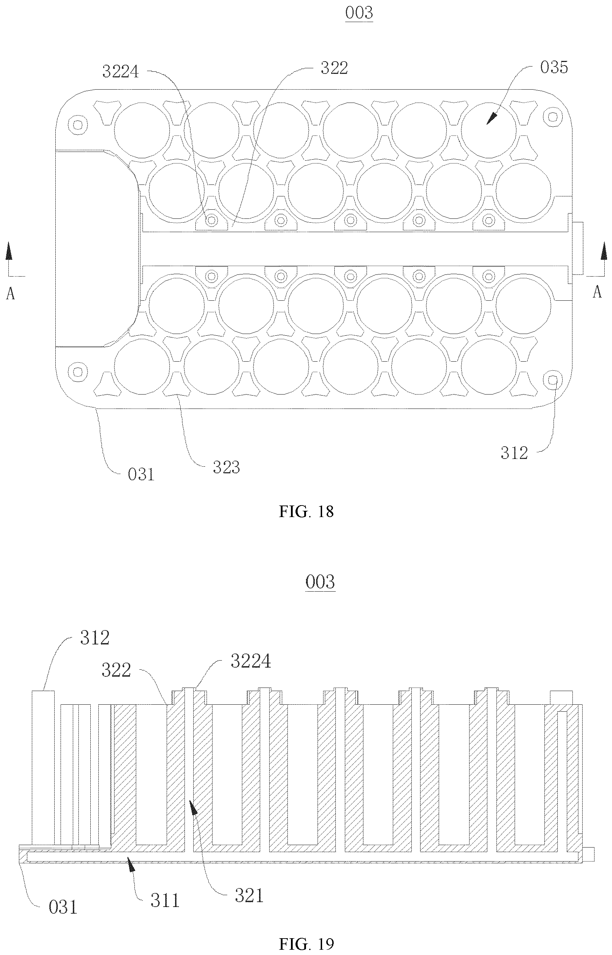

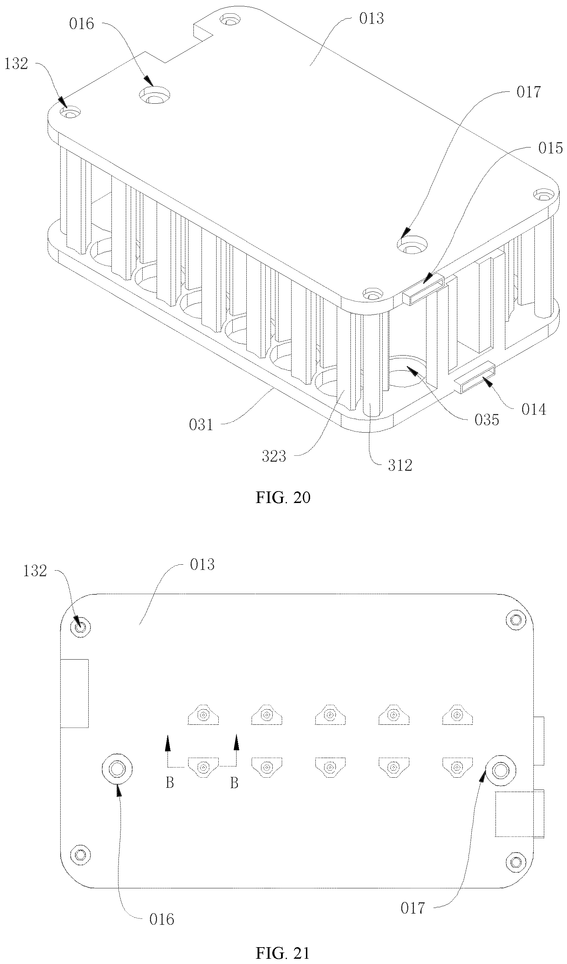

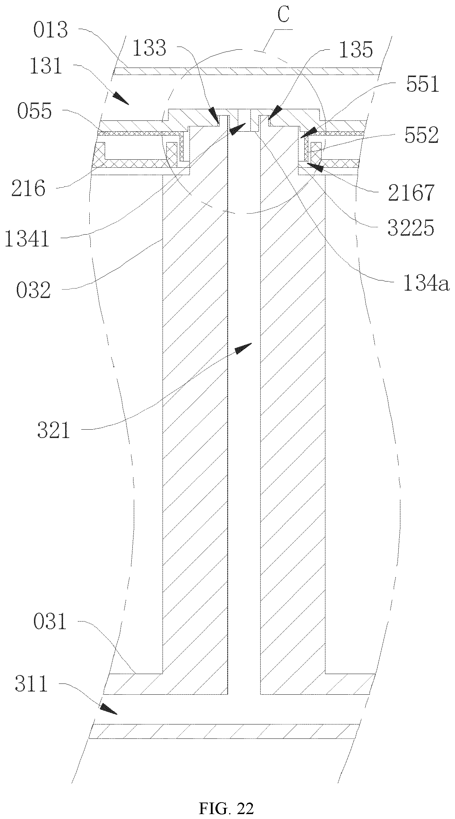

Referring to FIGs. 16 and 17, FIG. 16 is a schematic structural diagram of a base 003 according to some embodiments of the present disclosure, and FIG. 17 is a schematic structural diagram of a base 003 in another viewing according to some embodiments of the present disclosure. In an embodiment, the base 003 includes a base plate 031 and a plurality of thermal management posts 032. The base plate 031 is provided with a first cavity 311. A plurality of thermal management posts 032 are disposed on the base plate 031. The thermal management posts 032 are provided with a second cavity 321. The second cavity 321 communicates with the first cavity 311, as shown in FIGs. 18 and 19, wherein FIG. 18 is a top view of a base 003 according to some embodiments of the present disclosure, and FIG. 19 is a cross-sectional view along A-A in FIG. 18. Mounting slots are defined among the thermal management posts 032. At least one of the base plate 031, the thermal management posts 032, and the top cover 013 is provided with a flow channel opening. Part of the thermal management posts 032 is connected to the top cover, and the second cavity 321 of this part of the thermal management posts 032 communicates with the third cavity 131, as shown in FIGs. 21 and 22, wherein FIG. 21 is a top view of FIG. 20, and FIG. 22 is a cross-sectional view along B-B in FIG. 21. The base plate 031 and the top cover 013 are provided with flow channel openings.

It can be understood that the flow channel opening includes a liquid outlet 014, a liquid inlet 015, an air inlet 016, and an air outlet 017 in communication with the cavity. It may be a case that the flow channel opening may be provided on the base plate 031, on the thermal management post 032, or on the top cover 013. It may also be a case that part of the flow channel opening is provided on the base plate 031, and another part of the flow channel opening is provided on the top cover 013. For example, the liquid inlet 015, the air inlet 016, and the air outlet 017 are disposed on the top cover 013, and the liquid outlet 014 is disposed on the base plate 031.

When filling the heat exchange medium, the second cavity 321, which is not in direct communication with the third cavity 131, is the heat exchange end of the heat exchange medium. However, these second cavities 321 have no sequence in the transmission path of the heat exchange medium, that is, the heat exchange medium located in the first cavity 311 can enter these second cavities 321 simultaneously. As a result, the transmission path of the heat exchange medium can be shortened, thereby reducing the time for the heat exchange medium to fille the second cavity 321.

In embodiments of the present disclosure, by disposing the base 003 as a combination of the base plate 031 and the thermal management posts 032, on the one hand, the heat exchange medium can flow synchronously to a plurality of second cavities 321, so as to shorten the transmission path of the base 003 for the heat exchange medium, thereby accelerating the circulation speed of the heat exchange medium, further shortening the temperature management cycle of the base 003, providing efficient cooling effect for the battery cell in a shorter time, and finally improving the temperature management efficiency of the base 003. On the other hand, part of the thermal management posts 032 serve as the end of the transmission path of the thermal management medium, and these thermal management posts 032 can be simultaneously filled with liquid, thereby improving the temperature management efficiency of the base 003 for the battery cells away from the liquid inlet end.

In addition, the thermal management process of the battery cell in embodiments of the present disclosure is a reciprocating cycle of filling cavity and emptying cavity, while the unconventional heat exchange medium continuously flows and circulates. In this way, there is no need to configure an isolation tube wall inside the second cavity 321 to make the flow direction of the heat exchange medium inside the second cavity 321 unique, thereby simplifying the structure of the base 003. As a result, the manufacturing process of the base 003 is simpler, which is conducive to controlling the manufacturing cost of the base 003.

Furthermore, the base plate 031 has the function of supporting the battery cell and positioning the battery cell, so that the battery cell can be directly mounted on the base plate 031, and the component of the battery cell tray can be omitted. As a result, the assembly cost can be reduced, and the assembly efficiency can be improved. The shape and size of the battery cell mounting slot are consistent with the battery cell. For example, if the battery cell is a cylindrical battery cell, the battery cell mounting slot is cylindrical. Specifically, the side wall of the thermal management posts 032 facing the battery cell is a cylindrical arc surface, and the cylindrical arc surface is coaxially arranged with the battery cell opposite thereto, as shown in FIG. 16. Further, a thermal conductive adhesive is applied between the battery cell and the cylindrical arc surface to improve the thermal conductivity of the battery cell, thereby improving the temperature management efficiency.

Furthermore, by connecting a part of the thermal management posts 032 to the top cover and communicating the second cavity 321 of this part of the thermal management posts 032 with the third cavity 131 can not only improve the integrity of the battery cell bracket, but also improve the integrity of the thermal management pipeline, so that the layout of the thermal management pipeline is simpler and the maintenance is more convenient.

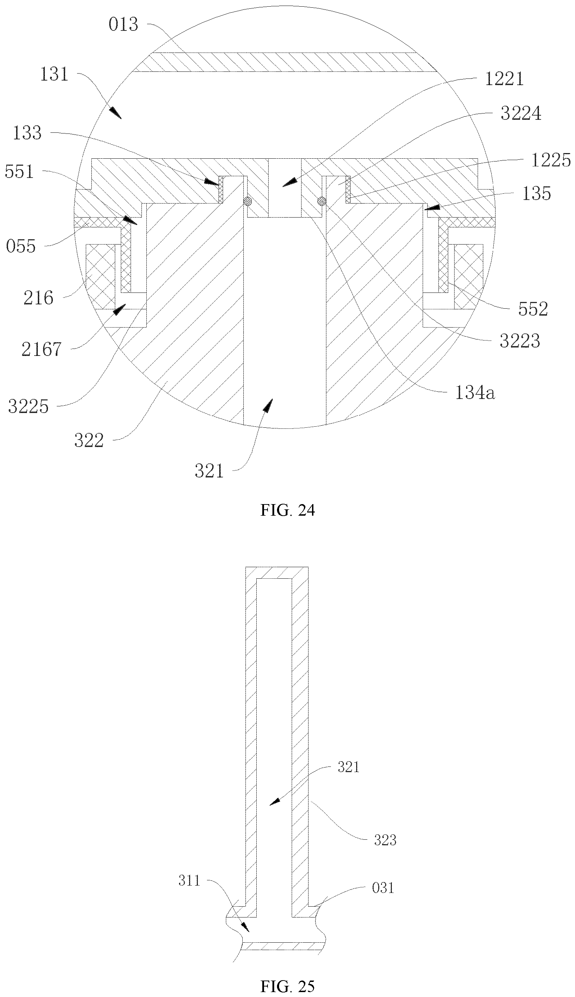

Referring to FIGs. 24 and 25, FIG. 24 is an enlarged view at C in FIG. 22, and FIG. 25 is a cross-sectional view of a second cylinder according to some embodiments of the present disclosure. In an embodiment, each thermal management post 032 includes a first post 322 and a second post 323. The second cavity 321 on the first post 322 is in communication with the third cavity 131, and the first post 322 is plugged into the top cover 013. The end of the second cavity 321 of the second post 323 away from the base plate 031 is a closed end, as shown in FIG. 25.

In some embodiments, the thermal management post 032 connected to the top cover 013 is a first post 322, the end of the first post 322 away from the base plate 031 is convexly provided with a connection ring 3225, the first bracket 216 is provided with a first via 2167, the end of the connection ring 3225 away from the first post 322 passes through the first via 2167 and is sealed and connected with the top cover 013, and the second cavity 321 of the first post 322 communicates with the third cavity 131 through the inner hole of the connection ring 3225.

In embodiments of the present disclosure, by inserting the connection ring 3225 on the first bracket 216, the first bracket 216 can be prevented from rotating, thereby improving the position stability of the first bracket 216 relative to the first post 322, and further improving the structural stability of the battery cell bracket.

In an embodiment, one side of the top cover 013 close to the first post 322 is convexly provided with a first insertion shaft 134a. One end of the first insertion shaft 134a away from the top cover 013 is inserted into the inner hole of the connection ring 3225. The first insertion shaft 134a is provided with a first communication hole 1341. The second cavity 321 of the first post 322 communicates with the third cavity 131 through the first communication hole 1341. The outer peripheral surface of the first insertion shaft 134a is sealingly engaged with the cavity wall of the second cavity 321 of the first post 322.

It can be understood that the first bracket 216 is provided with a first via 2167, and the end of the first post 322 away from the base plate 031 passes through the first via 2167 and is plugged into the top cover 013.

In addition, an end of the second cavity 321 on the second post 323 away from the base plate 031 is a closed end, which is not communicated with the third cavity 131. There are a plurality of first posts 322, and the plurality of first posts 322 are divided into two groups. The first posts 322 in each group are sequentially disposed at regular intervals along the length direction of the BMS board 012, and two adjacent first posts 322 along the length direction are connected into a whole, and there is a gap between the two groups of first posts 322, which is the BMS mounting slot 036.

Exemplarily, a first sealing ring 3223 is disposed between the outer peripheral surface of the first insertion shaft 134a and the cavity wall of the second cavity 321 of the first post 322, the first sealing ring 3223 is radially compressed to achieve a sealing fit between the two locations. The inner peripheral side of the first sealing ring 3223 can be embedded on the outer peripheral surface of the first insertion shaft 134a. The first sealing ring 3223 may be an O-ring.

In embodiments of the present disclosure, by plugging the first post 322 into the top cover 013, the top cover 013 can be positioned relative to the first post 322 through the plug-in structure, thereby improving the position accuracy of the top cover 013. Moreover, the plug-in structure can increase the obstruction of the flow of the heat exchange medium, thereby improving the sealing of the connection between the top cover 013 and the first post 322, and preventing the heat exchange medium from leaking from the connection portion.

Referring to FIG. 24, in an embodiment, an annular slot 133 is disposed around the periphery of the first insertion shaft 134a on the top cover 013, and the end of the connection ring 3225 away from the first post 322 is convexly provided with an insertion ring 3224. The insertion ring 3224 is sleeved on the first insertion shaft 134a, and the end of the insertion ring 3224 away from the connection ring 3225 is inserted into the annular slot 133. The insertion ring 3224 is sealingly engaged with the annular slot 133.

In embodiments of the present disclosure, by disposing the annular slot 133 and the insertion ring 3224, the top cover 013 is also positioned through the cooperation of the annular slot 133 and the insertion ring 3224, in this way, it can not only further improve the position accuracy of the top cover 013, but also improve the stability of the connection between the top cover 013 and the first post 322.

Referring to FIG. 24, specifically, the outer peripheral surface of the insertion ring 3224 is sealingly engaged with the outer slot wall of the annular slot 133.

Exemplarily, a second sealing ring 1225 is disposed between the outer peripheral surface of the insertion ring 3224 and the outer slot wall of the annular slot 133, the second sealing ring 1225 is radially compressed to achieve a sealing fit between the two locations. The second sealing ring 1225 is a rectangular sealing ring.

In embodiments of the present disclosure, by sealingly engaging the outer peripheral surface of the insertion ring 3224 with the outer slot wall of the annular slot 133, the sealing performance of the connection between the top cover 013 and the first post 322 can be improved, thereby preventing the heat exchange medium from leaking from the connection between the top cover 013 and the first post 322.

Referring to FIG. 24, in an embodiment, the side of the top cover 013 facing the base plate 031 is provided with a mating hole 135 into which the end of the connection ring 3225 away from the first post 322 is inserted.

In embodiments of the present disclosure, by plugging the connection ring 3225 into the top cover 013, the matching structure between the base 003 and the top cover 013 can be increased, thereby further improving the matching accuracy between the base 003 and the top cover 013, thus avoiding misalignment of the communication portions between the third cavity 131 and the first cavity 311, and finally improving the structural stability of the battery cell bracket.

In an embodiment, the cross-section of the connection ring 3225 is polygonal, and the shape of the cross-section of the first via 2167 and the shape of the cross-section of the second via 551 are consistent with the shape of the cross-section of the connection ring 3225.

Exemplarily, the cross-section of the connection ring 3225 is polygonal, and both the shape of the cross-section of the first via 2167 and the shape of the cross-section of the second via 551 are consistent with the shape of the cross-section of the connection ring 3225. For example, if the connection ring 3225 is a triangular ring, its cross-section is triangular, and its three edges are rounded, the shape of the cross-section of the first via 2167 and the shape of the cross-section of the second via 551 are triangles with rounded corners. Both of the first vias 2167 and the second via 551 are in clearance fitting with the connection ring 3225.

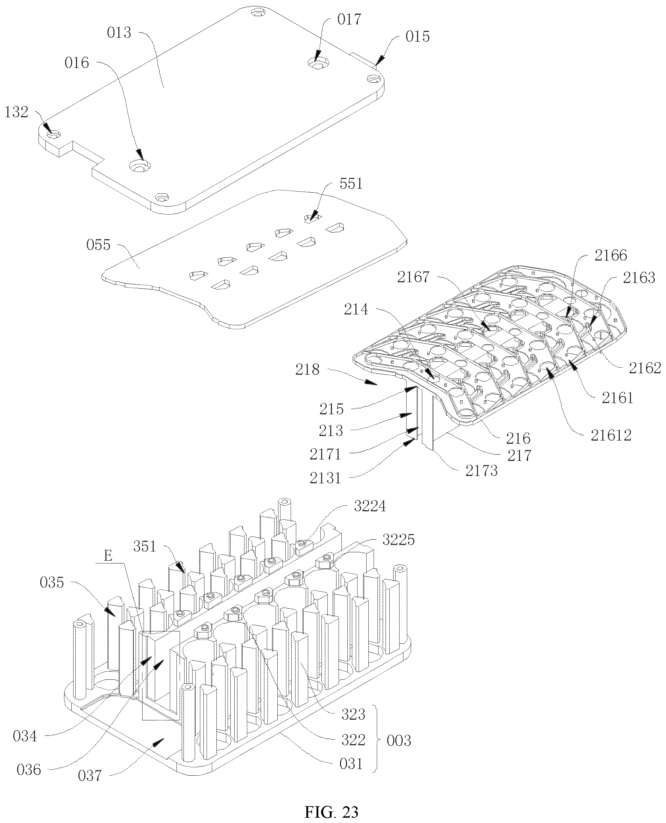

Referring to FIG. 23, in an embodiment, the base 003 and the top cover 013 are metal members. The battery cell bracket further includes an insulating sheet 055, and insulating sheet 055 is disposed between the CCS assembly 011 and the top cover 013. The insulating sheet 055 is provided with a second via 551, and one end of the connection ring 3225 passes through the first via 2167 and the second via 551, and is sealingly connected to the top cover 013.

It can be understood that by setting the base 003 and the top cover 013 as metal members, their strength can be enhanced, thereby making their support for the battery cells more stable and reliable. However, after the base 003 and the top cover 013 are set as metal members, in order to prevent the CCS assembly 011 from short-circuiting due to contacting between them, the insulating sheet 055 needs to be set on the side of the CCS assembly 011 close to the top cover 013, so as to insulate the CCS assembly from the CCS assembly. In order to further improve the current transmission stability, an insulating layer, an insulating rubber sleeve, or the like may be disposed on the periphery of the battery cell 018 to insulate the periphery of the battery cell 018 from the base 003.

Meanwhile, the insulating sheet 055 is provided with a second via 551, and one end of the connection ring 3225 away from the base plate 031 passes through the first via 2167 and the second via 551 in sequence, and is plugged into the top cover 013. In this way, in embodiments of the present disclosure, by passing the connection ring 3225 through the insulating sheet 055, the insulating sheet 055 can be prevented from rotating, thereby improving the position stability of the insulating sheet 055 relative to the first cylinder 322, and improving the structural stability of the battery cell bracket.

Referring to FIG. 24, in an embodiment, a mating ring 552 is provided on one side of the insulating sheet 055 close to the first bracket 216, one end of the mating ring 552 is connected to the insulating sheet 055, and the other end of the mating ring 552 is located in the annular space between the first via 2167 and the connection ring 3225.

In embodiments of the present disclosure, by disposing the mating ring 552, the matching area between the insulating sheet 055 and the connection ring 3225 and the first bracket 216 can be increased, so as to avoid the insulating sheet 055 from shaking randomly, thereby improving the position stability of the insulating sheet 055.

In an embodiment, the shape of the cross-section of the second via 551 is consistent with the shape of the cross-section of the connection ring 3225, so that the reliability of the cooperation between the insulating sheet 055 and the connection ring 3225 can be improved.

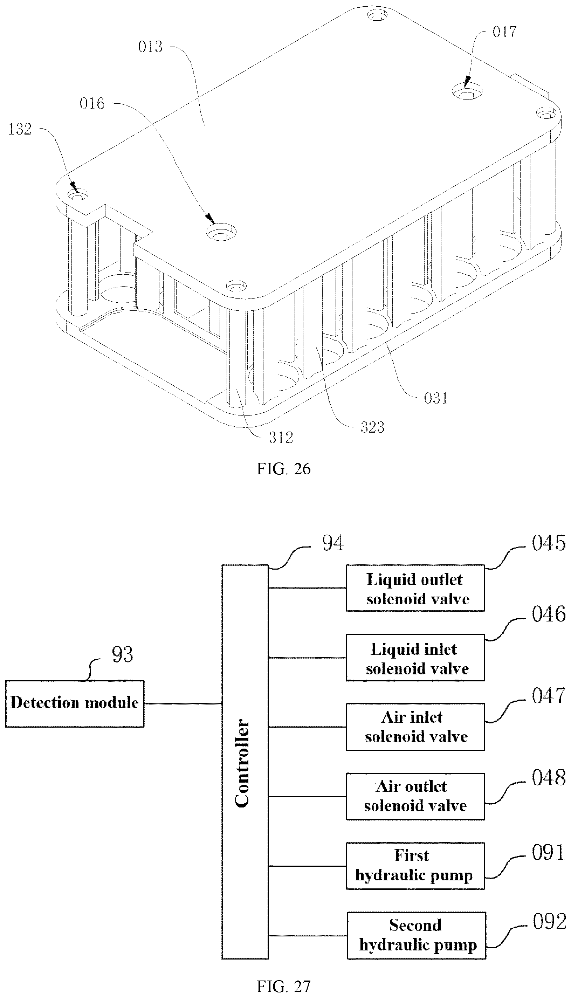

Referring to FIG. 26, which is a schematic view of a top cover 013 and a base 003 matching with each other in another viewing according to some embodiments of the present disclosure. In an embodiment, the flow channel opening includes a liquid outlet 014, a liquid inlet 015, an air inlet 016, and an air outlet 017 in communication with the cavity. The liquid inlet 015, the air inlet 016, and the air outlet 017 are disposed on the top cover 013, and the liquid outlet 014 is disposed on the base 003.

Exemplarily, the air inlet 016 and the air outlet 017 are disposed on the top of the top cover 013, for example, the air inlet 016 and the air outlet 017 are located on the side of the top cover 013 away from the base plate 031, so as to make the air intake and exhaust of the cavity more smooth. Further, in order to prevent the heat exchange medium from being discharged from the air outlet, the gas selective permeation membrane may be covered on the air inlet 016 and the air outlet 017, so that only the gas can pass through the air inlet 016 and the air outlet 017.

When the heat exchange medium in the cavity is discharged, the air inlet 016 and the liquid outlet 014 are opened. At this time, the air outlet 017 and the liquid inlet 015 are closed. The heat exchange medium in the cavity flows into the temperature management module 042 through the liquid outlet 014, and the air inlet 016 takes in air to fille the space occupied by the reduced heat exchange medium in the cavity, thereby facilitating rapid discharge of the heat exchange medium. After the heat exchange medium in the cavity is discharged, the air outlet 017 and the liquid inlet 015 are opened, and the air inlet 016 and the liquid outlet 014 are closed. New heat exchange medium flows into the cavity from the liquid inlet. At the same time, air in the cavity is discharged from the air outlet 017 to facilitate rapid filling of the cavity through the heat exchange medium.

In embodiments of the present disclosure, by disposing the air inlet 016 and the air outlet 017, on the one hand, it is possible to avoid the negative pressure formed in the cavity during the discharge to hinder the discharge of the heat exchange medium, making the discharge smoother. On the other hand, it is also possible to avoid insufficient liquid feeding caused by air in the cavity during liquid feeding, thereby ensuring liquid feeding efficiency and temperature management efficiency.

In an embodiment, the thermal management posts 032 are integrally formed with the base plate 031.

Exemplarily, the base plate 031 includes a cover plate and a box body with an opening, and the cover plate covers the opening to seal and isolate the inner cavity of the box body from the outside. The thermal management posts 032 can be disposed on the cover plate or the box body.

In embodiments of the present disclosure, by integrally forming the thermal management posts 032 and the base plate 031, the strength of the connection between the thermal management posts 032 and the base plate 031 can be improved, thereby preventing the heat exchange medium from leaking from the connection between the thermal management posts and the base plate 031.

In an embodiment, the battery cell 018 is a cylindrical battery cell. The side wall of the thermal management post 032 facing the battery cell 018 is a cylindrical arc surface, which is coaxially disposed with the battery cell 018 opposite thereto.

In an embodiment, a BDU module mounting area is disposed on the surface where the base plate 031 is connected with the thermal management posts 032, and the BDU module mounting area is at least partially surrounded by the thermal management posts 032 to form a BDU mounting slot 037.

In embodiments of the present disclosure, by disposing the BDU mounting slot 037 on the surface where the base plate 031 is connected with the thermal management posts 032, the overall structure compactness of the battery module can be improved, thereby controlling the volume of the battery module, and shortening the relative electrical connection path of the battery module.

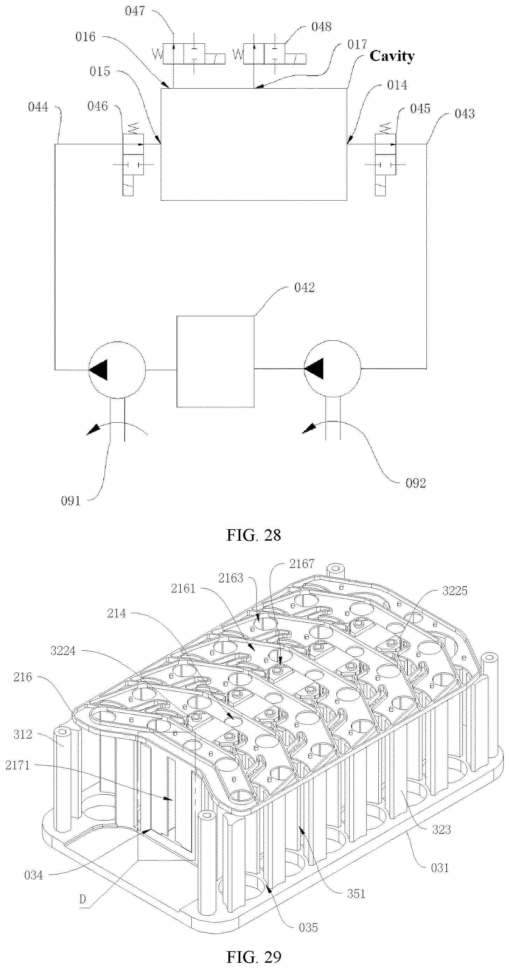

Referring to FIGs. 27 and 28, FIG. 27 is a schematic diagram of electrical connections of portions of some electrical components of a battery module according to some embodiments of the present disclosure, and FIG. 28 is a schematic diagram of the hydraulic principle of a thermal management system of a battery module according to some embodiments of the present disclosure. In an embodiment, the flow channel opening includes a liquid inlet 015, a liquid outlet 014, an air inlet 016, and an air outlet 017. The battery module further includes a temperature management module 042, an output pipeline 043, an input pipeline 044, a liquid outlet solenoid valve 045, a liquid inlet solenoid valve 046, an air inlet solenoid valve 047, an air outlet solenoid valve 048, a hydraulic pump, a detection module 93, and a controller 94. The temperature management module 042 is configured to perform temperature management on the heat exchange medium. Both ends of the output pipeline 043 are connected to the liquid outlet and the temperature management module 042, respectively. Both ends of the input pipeline 044 are connected to the liquid inlet and the temperature management module 042, respectively. The liquid outlet solenoid valve 045 is configured to control the on-off of the drain port; The liquid inlet solenoid valve 046 is configured to control the on-off of the liquid inlet. The air inlet solenoid valve 047 is configured to control the on-off of the air inlet. The air outlet solenoid valve 048 is configured to control the on-off of the air outlet. The hydraulic pump is configured to drive the flow of the heat exchange medium in the input pipeline 044 and the output pipeline 043. The detection module 93 is configured to detect the filling amount of the heat exchange medium in the base 003. The controller 94 responds to the detection information of the detection module 93 and controls the operation states of the liquid outlet solenoid valve 045, the liquid inlet solenoid valve 046, the air inlet solenoid valve 047, the air outlet solenoid valve 048, and the hydraulic pump.

It can be understood that there are two hydraulic pumps, namely, a first hydraulic pump 091 for driving the flow of the heat exchange medium in the input pipeline 044 and a second hydraulic pump 092 for driving the flow of the heat exchange medium in the output pipeline 043.

Exemplarily, the controller 94 is a BMS board 012. The detection module 93 is a fluid pressure sensor, which is used to collect fluid pressure information in the cavity. When it is necessary to heat the battery cell 018, the temperature management module 042 is a device for heating the heat exchange medium, such as a pipe or a cylinder wrapped with heating wires. When it is necessary to cool the battery cell 018, the temperature management module 042 is a device for cooling the heat exchange medium, such as an evaporator equipped with a fan or a fin heat sink.

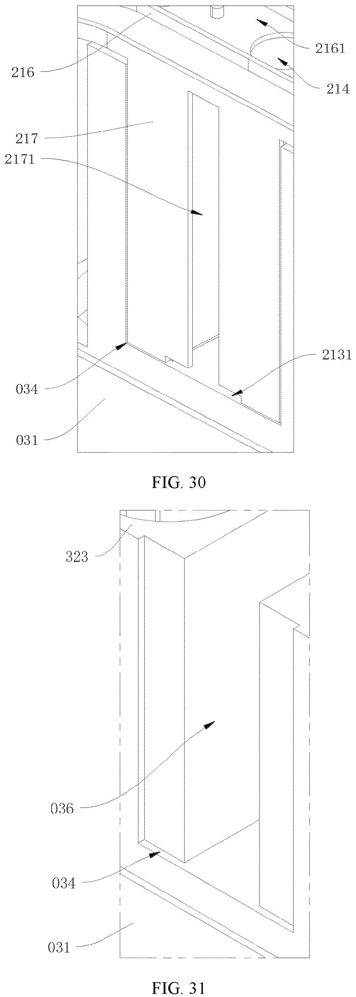

Referring to FIGs. 29 and 31, FIG. 29 is a schematic structural diagram of a base and a bracket matching with each other according to some embodiments of the present disclosure., FIG. 30 is an enlarged view at D in FIG. 29, and FIG. 31 is an enlarged view at E in FIG. 23. A step slot 034 is disposed on one side of the base 003a close to the slot end of the BMS mounting slot 036, and the step slot 034 communicates with the BMS mounting slot 036. A card board 2173 is disposed at one end of the side wall of the second bracket 217 close to the slot end of the first mounting slot 2171. The card board 2173 cooperates with the step slot 034. Specifically, the step slot 034 is disposed on one side of the first post 322 close to the first slot 215. In this way, the position accuracy of the second bracket 217 relative to the base 003 can be improved, and then the position accuracy of the CCS assembly on the second bracket 217 relative to the battery cell 018 on the base 003 can be improved. As a result, the operability of the electrical connection between the CCS assembly 011 and the battery cell 018 is improved, thereby improving the stability of the electrical connection between the CCS assembly 011 and the battery cell 018.

Optionally, the base plate 031 is rectangular with a center line parallel to the long side, and the thermal management post close to center line is the first post 322, as shown in FIG. 18. The plurality of first posts 322 are divided into two groups, the plurality of first posts 322 in each group are evenly distributed in sequence along the center line, and the two groups of first posts 322 are symmetrically arranged along the center. The plurality of first posts 322 in each group are connected in sequence as a whole.

Referring to FIG. 23, in an embodiment, the base 003 is provided with an inner threaded stud 312, and the top cover 013 is detachably connected to the inner threaded stud 312.

Specifically, the top cover 013 is provided with a third bolt through-hole 132, and the screw end of the bolt passes through the inner threaded stud 312 and is threadably connected with the inner threaded stud 312.

Exemplarily, the top cover 013 is provided with third bolt through-holes 132 at four corners, and the base plate 031 is provided with inner threaded studs 312 at four corners. After the bolts pass through the inner threaded stud 312 and is threadably connected to the inner threaded stud 312, thereby improving the position stability of the top cover 013 and the stability of communication between the first cavity 311 and the third cavity 131.

Referring to FIG. 15 or FIG. 16, in an embodiment, there are a plurality of battery cell mounting slots 035, and the plurality of battery cell mounting slots 035 are divided into two groups. The BMS mounting slots 036 are located between the two groups of battery cell mounting slots 035, and the BDU mounting slot 037 is located at one end of the BMS mounting slots 037 and is disposed close to the two groups of battery cell mounting slots 035.

In embodiments of the present disclosure, by defining the relative positions of the three mounting slots, the battery cell bracket is in a symmetrical structure. In this way, on the one hand, the arrangement regularity of components such as battery cells 018 can be improved, thereby improving the convenience of assembly and maintenance. On the other hand, the load of the base 003 can be balanced, so that the gravity distribution borne by the base 003 from the battery cell 018 and the like is more uniform, thereby reducing the overload on one side of the of the base 003 or the unbalanced force on both sides of the base 003, thus improving the stability and bearing capacity of the base 003.

Referring to FIG. 15 or FIG. 16, in an embodiment, a communication slot 351 is disposed between two adjacent battery cell mounting slots 035.

It can be understood that in order to improve the stability of the battery cell 0018 and prevent it from shaking relative to the battery cell bracket, it is necessary to inject glue between the battery cell bracket and the battery cells 018, and connect the battery cells 018 and the battery cell bracket into a whole through the glue. Therefore, in order to improve the fluidity of the glue and uniformity of the filled glue, the communication slot 351 is provided to communicate the two adjacent battery cell mounting slots 035, so that the glue can flow through the communication slots 351.

In addition, communication slots 351 may be provided between the BDU mounting slot 037 and the battery cell mounting slots 035 to further improve the uniformity of the glue poured into the cell holder.

On the basis of the foregoing embodiments, the heat management process of the battery is as follows:

### S001. Filling the cavity

Firstly, the controller 94 controls the liquid inlet solenoid valve 046 and the air outlet solenoid valve 048 to open, the liquid outlet solenoid valve 045 and the air inlet solenoid valve 047 to close, and starts the first hydraulic pump 091, so as to allow the first hydraulic pump 091 to send the heat exchange medium in the temperature management module 042 into the cavity through the input pipeline 044. Then, when the cavity is filled with the heat exchange medium, the detection module 93 detects the first fluid pressure value and sends the information to the controller 94. The controller 94 closes the first hydraulic pump 091, the liquid inlet solenoid valve 046, and the air outlet solenoid valve 048 in response to the information.

### S002. Emptying the cavity

Firstly, the controller 94 controls the liquid outlet solenoid valve 045 and the air inlet solenoid valve 047 to open, and starts the second hydraulic pump 092, so as to allow the second hydraulic pump 092 to send the heat exchange medium in the cavity to the temperature management module 042 through the output pipeline 043. At this time, the liquid inlet solenoid valve 046 and the air outlet solenoid valve 048 are in the closed state. Then, after the cavity is emptied, the detection module 93 detects the second fluid pressure value and sends the information to the controller 94. The controller 94 closes the second hydraulic pump 092, the liquid inlet solenoid valve 046, and the air outlet solenoid valve 048 in response to the information.

### S003. Repeating steps 5001 and S002.

The triggering condition for emptying the cavity can be that the controller operates according to the time when the cavity is filled with the heat exchange medium. For example, when the time for filling the cavity with the heat exchange medium is set to 10 minutes, it is taken as its triggering condition.

In addition, the temperature of the heat exchange medium in the cavity may be used as a triggering condition. At this time, it is necessary to set a fluid temperature sensor in the cavity to collect temperature information of the heat exchange medium. When the collected temperature information exceeds or falls below the threshold value, the cavity is emptied and the next round of cavity filling is performed. For example, when it is necessary to heat the battery, when the collected temperature information is less than 5 °C, the cavity is emptied and the next round of cavity filling is performed to heat the battery. When it is necessary to dissipate heat from the battery, when the collected temperature information exceeds 50 °C. the cavity is emptied and the cavity of the next round of cavity filling is carried out to cool the battery.

## Claims

1. A bracket (002) comprising:
a first bracket (216) having a first side and a second side opposite to each other, the first side being configured to mount a CCS assembly (011);
a second bracket (217) extending from the second side in a direction away from the first bracket (216), one side of the second bracket (217) away from the first bracket (216) being provided with a first mounting slot (2171) configured to mount a BMS board (012), one end of the first mounting slot (2171) is provided with a first slot (215) penetrating through a first side wall (213) of the second bracket (217), and the first side wall (213) being configured to contact a BDU module (013a);
wherein the first side is provided with a plurality of first through-holes (214), the plurality of first through-holes (214) communicate with a bottom of the first mounting slot (2171), the the plurality of first through-holes (214) are used for electrically connecting the CCS assembly (011) to the BMS board (012), and the first slot (215) is used for electrically connecting the BMS board (012) to the BDU module (013a);
preferably the first bracket (216) and the second bracket (217) are integrally formed.

2. The bracket (002) according to claim 1, **characterized in that** the first side is provided with a second mounting slot configured to mount a CCS assembly (011), and the plurality of first through-holes (214) are disposed at a bottom of the second mounting slot.

3. The bracket (002) according to claim 2, **characterized in that** the second mounting slot comprises a plurality of sub-slots (2161), and a bottom of each of the plurality of sub-slots (2161) is provided with each of the plurality of first through-holes (214);
preferably the plurality of the sub-slots (2161) are sequentially disposed in a first direction, and both ends of each of the plurality of the sub-slots (2161) are symmetrical to each other in a second direction, and the first direction and the second direction are perpendicular to each other.

4. The bracket (002) according to claim 3, **characterized in that** the bottom of each of the plurality of the sub-slots (2161) is provided with a mating rib (2162), and the mating rib (2162) is provided with a second through-hole (2163).

5. The bracket (002) according to claim 4, **characterized in that** the mating rib (2162) comprises a first section (2164) and a second section (2165), one end of the first section (2164) is connected to a slot wall of each of the plurality of the sub-slots (2161) and another end is connected to one end of the second section (2165), and an angle is formed between the first section (2164) and the second section (2165), and at least a part of the slot wall of each of the plurality of the sub-slots (2161), the first section (2164) and the second section (2165) enclose a hole wall of the second through-hole (2163);
preferably the angle formed between the first section (2164) and the second section (2165) ranges from 100° to 170°.

6. The bracket (002) according to claim 1, **characterized in that** the second side is provided with a battery cell (018) mounting area (218), two battery cell (018) mounting areas (218) are disposed on both sides of the second bracket (217) respectively; a plurality of pole connection holes (21612) are also provided inside the first bracket (216) from the first side, and the plurality of pole connection holes (21612) communicate with the battery cell (018) mounting area (218).

7. The bracket (002) according to any one of claims 1 to 6, **characterized in that** one end of the first side wall (213) away from the first bracket (216) is provided with a positioning aperture (2131), and the positioning aperture (2131) communicates with the first slot (215);
preferably the first bracket (216) is provided with a plurality of glue filling through-holes (2166).

8. An electrical connection assembly (001), comprising:
the bracket (002) according to any one of claims 1 to 7;
the CCS assembly (011) mounted on the first side;
the BMS board (012) mounted in the first mounting slot (2171); and
the BDU module (013a) abutted against the first side wall (213);
wherein an electrical connection structure between the CCS assembly (011) and the BMS board (012) is disposed in each of the plurality of first through-holes (214), and the electrical connection structure between the BMS board (012) and the BDU module (013a) is disposed in the first slot (215).

9. The electrical connection assembly (001) according to claim 8, **characterized in that** the CCS assembly comprises a first output pole (111) and a plurality of bus-bar (112) groups; the BMS board (012) comprises a second output pole (122) and a plurality of voltage collection terminals (121), the first output pole (111) and the plurality of bus-bar (112) groups correspond one-to-one to the plurality of voltage collection terminals (121), the first output pole (111) and the plurality of bus-bar (112) groups are respectively electrically connected to a corresponding one of the plurality of voltage collection terminals (121), and the corresponding one of the plurality of voltage collection terminals (121) electrically connected to the first output pole (111) is also electrically connected to the second output pole (122); and the BDU module (013a) comprises a first input pole (131a) electrically connected to the second output pole (122);
preferably the first input pole (131a) is plugged into the second output pole (122);
more preferably one end of the first input pole (131a) close to the second output pole (122) is provided with an insertion hole (1311), and the second output pole (122) is plugged into the insertion hole (1311).

10. The electrical connection assembly (001) according to claim 9, **characterized in that** the BDU module (013a) comprises:
a housing (132a) provided with an accommodating cavity, an input slot (1321) and an output slot (1322), the input slot (1321) is disposed on one side of the housing (132a) away from the BMS board (012), and the output slot (1322) is disposed on one side of the housing (132a) close to the first bracket (216);
the first input pole (131a) disposed in the input slot (1321);
a third output pole (136) disposed in the output slot (1322);
a first high-pressure protection cover (134) covered on the input slot (1321);
a second high-voltage protection cover (135a) covered on the output slot (1322);
an energy distribution unit disposed in the accommodating cavity, and the energy distribution unit electrically connects the first input pole (131a) and the third output pole (136).

11. The electrical connection assembly (001) according to claim 10, **characterized in that** the third output pole (136) comprises a third positive output pole and a third negative output pole, an insulating spacer (137) is disposed between the third positive output pole and the third negative output pole, and the insulating spacer (137) is connected to the housing (132a).

12. The electrical connection assembly (001) according to any one of claims 8 to 11, **characterized in that** the second bracket (217) has a second side wall disposed opposite to the first side wall (213), the second side wall is provided with a threading hole (2172), and a data interface of the BMS board (012) is disposed opposite to the threading hole (2172).

13. A battery module comprising:
a battery cell bracket comprising a base (003) and a top cover (013), the base (003) is provided with a mounting slot, the mounting slot comprising a battery cell mounting slot (035), a BMS mounting slot (036), and a BDU mounting slot (037); the top cover (013) covering the mounting slot;
a battery cell (018) disposed in the battery cell mounting slot (035); and
the electrical connection assembly (001) according to claims 8 to 12, the first bracket (216) being disposed between the base (003) and the top cover (013), the CCS assembly (011) being disposed on one side of the first bracket (216) close to the top cover (013), the second bracket (217) being inserted into the BMS mounting slot (036), and the BDU module (013a) being disposed in the BDU mounting slot (037).

14. The battery module according to claim 13, **characterized in that** a cavity configured to contain a heat exchange medium is disposed inside the battery cell bracket, a surface of the battery cell bracket is provided with a flow channel opening for communicating the cavity with an outside, and the heat exchange medium is configured to exchange heat with a component in the mounting slot and/or the CCS assembly.

15. The battery module according to claim 14, **characterized in that** the base (003) is provided with a first cavity (311) configured to accommodate the heat exchange medium, the heat exchange medium is configured to exchange heat with a component located in the mounting slot;
wherein the base (003) is provided with a flow channel opening configured to communicate the first cavity (311) with the outside.
